# FASCICULE DE BREVET EUROPEEN

(11) **EP 0 446 157 B1**
(45) Date de publication et mention de la délivrance du brevet: **05.06.1996**
(21) Numéro de dépôt: 91420079.5
(22) Date de dépôt: 05.03.1991
(51) Int. Cl.: C08L 83/04, C08K 3/38, C08K 13/02

(54) **Dispersion aqueuse à base d'huiles silicones reticulant, par elimination de l'eau en un élastomère résistant à la flamme**
Wässrige, durch Wasserabspaltung zu einem flammfesten Elastomer härtende Siliconöldispersion
Aqueous dispersion of silicone oils curable to a flame-resistant elastomer by elimination of water

(30) Priorité: 08.03.1990 FR 9003221
(43) Date de publication de la demande: 11.09.1991
(73) Titulaire: RHONE-POULENC CHIMIE, 92408 Courbevoie Cédex (FR)
(72) Inventeur: Feder, Michel, F-68720 Zillisheim-Illfurth (FR); Laurent, Claude, F-74600 Montagny-Les-Lanches Seynod (FR)
(74) Mandataire: Trolliet, Maurice

(56) Documents cités:
- EP-A- 304 719
- EP-A- 410 899
- EP-A- 0 134 912
- EP-A- 0 230 831
- EP-A- 0 317 447
- EP-A- 0 332 544
- EP-A- 0 347 309
- US-A- 4 554 187
- US-A- 4 663 226
- H.S. Katz, "Handbook of Fillers for Plastics", Van Nostrand Reinhold Co., New York 1987, pp. 367-373.

## Description

La présente invention concerne une dispersion aqueuse à base de silicone pouvant réticuler en un élastomère résistant à la flamme, par élimination de l'eau.

Les dispersions aqueuses à base de silicone, pouvant réticuler en un élastomère par élimination de l'eau et comportant :
- une émulsion (A) du type huile-dans-eau d'un α,ω-(dihydroxy)polydiorganosiloxane, stabilisée par un tensio-actif anionique et/ou non-ionique,
- un agent de réticulation,
- une charge minérale non siliceuse,
- un composé catalytique de durcissement, sont connues.

L'émulsion de base comporte l'huile silicone à extrémités silanols qui est généralement polymérisée en émulsion en suivant l'enseignement des brevets US-A-2 891 920, US-A-3 294 725 et US-A-3 360 491, c'est-à-dire en utilisant un tensio-actif anionique jouant également, de préférence, le rôle de catalyseur de polymérisation.

Dans ce type de dispersion aqueuse, la littérature enseigne la possibilité d'utiliser une grande diversité d'agents de réticulation parmi lesquels on peut citer :
- une microémulsion de résine silsesquioxane (US-A-3 355 406),
- un siliconate (EP-A-266 729, EP-A-332 544 et EP-A-365 439,
- une résine silicone réactive de faible masse moléculaire présentant des groupes alcoxy ou acyloxy (US-A-4 554 187),
- une résine silicone de haute masse moléculaire insoluble dans le toluène (EP-A-304 719),
- un polyalcoxysilane, un polysilicate, un polyacyloxysilane ou un polycétiminoxysilane (US-A-3 294 725, US-A-4 584 341, US-A-4 618 642, US-A-4 608 412),
- un polyamino (ou amido)silane (EP-A-387 157),
- un polyalcénoxysilane (EP-A-364 375),
- une résine silicone hydroxylée présentant par molécule au moins deux motifs siloxy choisis parmi ceux de formules : R₃SiO_{0,5} (M), R₂SiO (D), RSiO_{9,5} (T) et SiO₂ (Q) (EP-A-359 676).

Ces dispersions aqueuses sont généralement catalysées par un composé catalytique de durcissement qui est, de préférence, un sel d'étain, et qui peut être également l'association d'un sel d'étain et d'acide borique (FR-A-2 621 921 & EP-A-317 447).

Ces dispersions aqueuses sont stables au stockage pendant au moins un an, quand elles sont conditionnées en un seul emballage, en particulier dans une cartouche. Elles sont extrudables et présentent alors un caractère coulant ou non coulant.

On connaît déjà dans la technique antérieur (US-A-4 433 069) des compositions élastomères silicones pâteuses conditionnées en deux emballages, réticulant éventuellement sous la forme d'une mousse en présence de platine et présentant une résistance à la flamme élevée.

Ces compositions élastomères quine sont pas conditionnées sous forme de dispersions aqueuses sont efficaces, mais présentent l'inconvénient d'être chères et malaisées à mettre en oeuvre.

EP-A-230 831 propose un agent anti-flamme autre que le platine, pour le même type de compositions. Selon ce brevet on ajoute au moins 3,5 parties en volume d'un agent antiflamme formé d'un mélange de borax décahydraté, d'alumine hydratée et de silice, à une partie en volume de la composition élastomère silicone, la quantité minimum de silice étant d'au moins deux parties en volume.

FR-A-2 632 866 enseigne l'addition, dans un élastomère silicone d'un mélange de TiO₂ traité, de borax et de vermiculite.

On a déjà proposé des agents anti-flamme dans des dispersions aqueuses d'huiles silicones pouvant réticuler en élastomère par élimination d'eau : FR-A-2 621 921 enseigne l'utilisation d'alumine hydratée.

EP-A-317 447 décrit une émulsion de silicone, réticulant en un élastomère par élimination de l'eau dans les conditions ambiantes, caractérisée en ce qu'elle comporte, en poids:
(A) - 100 parties d'une émulsion du type huile dans eau d'un α,ω-(dihydroxy)polydiorganosiloxane stabilisée par au moins un agent tensio-actif choisi parmi les agents tensio-actifs anioniques et non-ioniques et leurs mélanges,
(B) - 1 à 15 parties d'une charge siliceuse en poudre de renforcement,
(C) - 0 à 250 parties d'une charge minérale autre que la charge siliceuse (B),
(D) - 0,01 à 2 parties d'un composé catalytique à l'étain,
(E) - 0,1 à 5 parties d'un dérivé oxygéné du bore, choisi parmi l'oxyde borique, les acides boriques et les borates,
ladite émulsion ayant un pH compris entre 4 et 8 et une teneur en extrait sec d'au moins 50 %.

EP-A-332 544 enseigne l'utilisation conjointe d'alumine hydratée et de vermiculite expansée ou non expansée.

EP-A-212 827 enseigne l'utilisation conjointe de vermiculite expansée et de fibres choisies parmi les fibres céramiques et les fibres aramides.

L'inconvénient majeur des élastomères brûlés, objets de ces trois derniers brevets, consiste dans le fait que l'élastomère brûlé ne présente plus de propriétés mécaniques car il est devenu un solide friable sans aucune cohésion.

EP-A-410 899 décrit des dispersions aqueuses à base d'une émulsion d'huile silicone et d'un latex de polymères organiques réticulant en un élastomère dont la résistance à la flamme peut être améliorée à condition d'utiliser 50 à 150 parties en poids (pour 100 parties d'émulsion silicone) d'une charge minérale non siliceuse comme l'alumine hydratée, la vermiculite, le borax hydraté. Cette amélioration est cependant limitée à cause du caractère inflammable des polymères de latex.

Le but principal de la présente invention est de proposer une dispersion aqueuse à base d'huiles silicones réticulant, par élimination de l'eau, en un élastomère résistant à la flamme, l'élastomère brûlé étant un solide présentant une grande cohésion et des propriétés mécaniques.

Un autre but de la présente invention est de proposer une dispersion aqueuse du type ci-dessus, qui puisse être non coulante sans toutefois comporter des charges siliceuses de synthèse constituées par les silices de pyrogénation et les silices de précipitation. On a en effet constaté que de telles charges d'une part, peuvent avoir un effet néfaste sur la stabilité au stockage des dispersions aqueuses et, d'autre part peuvent conduire à des élastomères présentant un module d'Young trop élevé.

Un autre but de la présente invention est de proposer une dispersion du type ci-dessus présentant éventuellement après réticulation, à la fois les propriétés suivantes :
- une stabilité au stockage pendant au moins six mois, de préférence au moins un an,
- une adhérence satisfaisante sur les supports les plus divers, pierre, béton, mortier, métaux, acide, aluminium, fibrociment, émaux, céramiques, etc....
- une viscosité convenable leur conférant une extrudabilité de la cartouche d'emballage et un caractère filmogène convenable,
- une résistance à l'abrasion, en particulier à l'abrasion humide, à l'humidité atmosphérique, aux rayonnements actiniques (lumière visible, U.V.) convenable,
- un retrait raisonnable après réticulation et évaporation de l'eau,
- une bonne perméabilité aux gaz et à la vapeur d'eau,
- des propriétés mécaniques satisfaisantes, en particulier pour le module élastique et la résistance à la déchirure,
- un caractère hydrofuge satisfaisant.

Ces buts, et d'autres sont atteints par la présente invention qui concerne en effet une dispersion aqueuse à base de silicone réticulant en un élastomère résistant à la flamme, par élimination de l'eau dans les conditions ambiantes, caractérisée en ce qu'elle est constituée des ingrédients suivants :
(A) : 100 parties en poids d'une émulsion, du type huile-dans-l'eau d'un α,ω-(dihydroxy) polydiorganosiloxane, stabilisée par au moins un agent tensioactif choisi parmi les agents tensioactifs anioniques et non-ioniques et leurs mélanges,
(B) : une quantité efficace d'au moins un agent de réticulation qui est choisi parmi :
   - un organosiliconate,
   - une résine silsesquioxane,
   - une résine silicone hydroxylée présentant par molécule, au moins 2 motifs différents choisis parmi ceux de formules : R₃SiO_{0,5} (M), R₂SiO (D), RSiO_{1,5} (T) et SiO₂ (Q), R étant un radical alkyle en C₁-C₆, vinyle et trifluoro-3,3,3 propyle et une teneur en poids en groupe hydroxyle comprise entre 0,1 et 10 %,
   - un silane de formule :

      RₐSiX₄₋ₐ

      dans laquelle R est un radical méthyle ou vinyle, a est 1 ou 0, X est un groupe condensable et/ou hydrolysable choisi parmi les groupes alcoxy, acyloxy, cétiminoxy, alkylamino et alcényloxy, et leurs divers mélanges possibles,
(C₁): 5 à 100 parties en poids, de préférence 20 à 80, d'une charge minérale non siliceuse, non hydratée,
(C₂): 10 à 100 parties en poids, de poudre de borax hydraté,
(C₃): éventuellement 5 à 200 parties d'une charge minérale hydratée non siliceuse différente de (C₂),
(D) : éventuellement 0,01 à 3 parties en poids d'un composé métallique catalytique de durcissement,
ladite dispersion ayant une teneur en extrait sec d'au moins 40 %.

### - L'EMULSION (A) :

Les α,ω-(dihydroxy)polydiorganosiloxane doivent avoir une viscosité d'au moins 100 mPa.s à 25°C, de préférence d'au moins 50 000 mPa.s.

C'est en effet pour des viscosités supérieures à 50 000 mPa.s que l'on obtient un élastomère présentant un ensemble de propriétés mécaniques convenables, en particulier au niveau de la dureté Shore A et de l'allongement.

En outre plus la viscosité est élevée et plus les propriétés mécaniques se conservent lors du vieillissement de l'élastomère.

Les viscosités préférées pour la présente invention sont comprises entre 50 000 et 1 500 000 mPa.s à 25°C.

Les radicaux organiques des α,ω-(dihydroxy) polydiorganosiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention on préfère plus spécialement utiliser les α,ω-(dihydroxy)polydiorganosiloxanes préparés par le procédé de polymérisation anionique décrit dans les brevets américains précités : US-A-2891 920 et surtout US-A-3 294 725 (cités comme référence). Le polymère obtenu est stabilisé anioniquement par un agent tensio-actif qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensio-actif préférés sont l'acide dodécylbenzènesulfonique et ses sels de métaux alcalins, en particulier son sel de sodium. On peut ajouter éventuellement d'autres agents tensio-actifs anioniques ou non-ioniques. Toutefois cet ajout n'est pas nécessaire car, conformément à l'enseignement de US-A-3 294 725, la quantité d'agent tensio-actif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement l'émulsion (A). Par ailleurs ce procédé permet de pouvoir obtenir sans difficulté des émulsions (A) de α,ω-(dihydroxy)polydiorganosiloxane de très haute viscosité.

Pour préparer l'émulsion (A) on peut également partir d'α,ω-(dihydroxy)polydiorgosiloxane déjà polymérisé, puis le mettre en émulsion aqueuse en stabilisant les émulsions par un agent tensio-actif anionique et/ou non-ionique suivant un procédé bien connu de l'homme de métier et décrit en détail dans la littérature (voir par exemple les brevets FR-A-2 064 563, FR-A-2 094 322, FR-A-2 114 230 et EP-A-169 098).

Selon ce procédé, on mélange par simple agitation les polymères α,ω-(dihydroxy)polydiorganosiloxane avec l'agent tensioactif anionique ou non-ionique, ce dernier pouvant être en solution aqueuse, à ajouter ensuite si nécessaire de l'eau et à transformer l'ensemble en une émulsion fine et homogène par passage dans un broyeur classique à colloïdes.

Par la suite le broyat obtenu est dilué par une quantité d'eau appropriée et on obtient ainsi une émulsion (A) stabilisée par un agent tensioactif anionique ou non-ionique stable au stockage.

La quantité d'agent tensioactif anionique et non-ionique utilisable est celle utilisée couramment pour la mise en oeuvre du procédé de mise en émulsion, en particulier ceux décrits dans les brevets précités et dans le brevet US-A-2 891 920.

Dans le cadre de la présente invention les agents tensioactifs anioniques préférés sont le sel d'un métal alcalin d'un acide hydrocarboné aromatique sulfonique et les agents tensioactifs non-ioniques préférés sont les alkylphénols polyoxyéthylénés. Ces agents tensioactifs non-ioniques sont bien entendu les mêmes que ceux que l'on peut ajouter éventuellement aux émulsions (A) obtenues par polymérisation en émulsion comme indiqué plus haut.

L'émulsion (A) préparée par polymérisation en émulsion ou par mise en émulsion du polymère silicone se présente sous la forme d'une émulsion huile dans l'eau et a, de préférence, une teneur en extrait sec supérieure à 45 % en poids.

### - L'AGENT DE RETICULATION (B) :

Cet agent de réticulation permet, lors de la réticulation de la dispersion aqueuse, de bâtir le réseau élastomère par des réactions de polycondensation entre les groupes réactifs de l'agent de réticulation et les extrémités silanol de l'huile silicone de l'émulsion (A).

Comme indiqué ci-dessus dans les documents brevets cités comme références, il existe de nombreux agents de réticulation différents pouvant être utilisés seuls ou en mélange. Les quantités d'agents de réticulation à introduire dans la dispersion aqueuse dépendent précisément de la nature de l'agent de réticulation utilisé.

Par quantité efficace de (B) on entend une quantité qui permette d'aboutir à un élastomère.

On trouvera ci-dessous la liste des agents de réticulation qui conviennent avec les quantités préconisées dans la dispersion finale, ces quantités étant exprimées en parties en poids pour 100 parties d'émulsion (A) :
(i) 0,1 à 15 parties, de préférence 1 à 10 parties d'un organosiliconate,
(2i) 1 à 100 parties d'une microémulsion de résine silsesquioxane selon l'enseignement combiné de US-A-3 355 406 et US-A-3 433 780,
(3i) 5 à 100 parties d'une résine silicone hydroxylée présentant par molécule, au moins 2 motifs différents choisis parmi ceux de formules : R₃SiO_{0,5} (M), R₂SiO (D); RSiO_{1,5} (T) et SiO₂ (Q), R étant un radical alkyle en C₁ - C₆, vinyle et trifluoro-3,3,3 propyle et une teneur en poids en groupe hydroxyle comprise entre 0,1 et 10 % ;
   parmi ces résines, introduites de préférence sous la forme d'émulsions aqueuses, on peut citer les résines MQ, MDQ, TD et MTD,
(4i) 1 à 20 parties d'un silane de formule :

   RₐSiX₄₋ₐ

   dans laquelle R est un radical méthyle ou vinyle, a est 1 ou 0,
   X est un groupe condensable et/ou hydrolysable choisi parmi les groupes alcoxy, acyloxy, cétiminoxy, alkylamino, amido et alcényloxy.

Dans le cas où X est un alcoxy, il est souhaitable d'ajouter comme stabilisant de l'amino-2 méthyl-2 propanol, conformément à l'enseignement de EP-A-0 259 734.

### La charge minérale non siliceuse (C₁)

Un autre constituant de la dispersion selon l'invention est l'addition de 5 à 100, de préférence de 20 à 80 parties d'une charge minérale non siliceuse et non hydratée.

Par charge (C₁) non siliceuse, on exclue donc les charges constituées par les silices de synthèse que sont les silices de combustion et les silices de précipitation.

Les charges (C₁) ont une granulométrie généralement comprise entre 0,001 et 300 µm et une surface BET inférieure à 100 m²/g.

Des exemples de charges (C₁) utilisables seules ou en mélange sont le dioxyde de titane, l'oxyde d'aluminium, les micas non hydratés tels que la muscovite, la séricite et la biotite, le carbonate de calcium, l'oxyde de zinc, le talc, l'oxyde de fer, le sulfate de baryum et la chaux éteinte.

La charge (C₁) préférée est le carbonate de calcium dont le diamètre particulaire moyen est inférieur à 0,1 µm, qui permet en outre d'obtenir une dispersion aqueuse finale présentant un caractère "thixotrope" plus ou moins marqué.

### La poudre de borax hydraté (C₂) :

Un autre constituant de la dispersion selon l'invention est l'addition de 10 à 100 parties en poids, de préférence de 20 à 80 parties en poids de poudre de borax hydraté qui est utilisé sous forme de poudre dont la granulométrie peut varier, comme pour la charge (C₁), entre 0,001 et 300 µm. Par borax hydraté, on entend selon l'invention un borax contenant de l'eau de cristallisation faisant partie de la structure moléculaire (C₂).

Comme borax hydraté, il est recommandé d'utiliser :
- le borax décahydraté, dénommé également tétraborate disodique décahydraté, de formule :

   Na₂B₄O₇, 10H₂O
- le borax pentahydraté, dénommé également tétraborate disodique pentahydraté, de formule :

   Na₂B₄O₇, 5H₂O
- le borax tétrahydraté, dénommé également kernite ou rasorite, à savoir le tétraborate disodique tétrahydraté, de formule :

   Na₂B₄O₇, 4H₂O

Lors de l'action de la flamme sur l'élastomère, ces borax hydratés céramisent les produits de la combustion de l'élastomère. L'élastomère brûlé conserve ainsi une excellente cohésion et se transforme en un matériau rigide conservant des propriétés mécaniques.

Dans le cadre de l'invention, il est recommandé d'utiliser, de préférence, le borax décahydraté.

### La charge minérale hydratée non siliceuse (C₃)

Dans le cadre de l'invention, l'utilisation de la charge (C₃) n'est pas indispensable mais elle est recommandée.

Par charge minérale (C₃) non siliceuse, on exclue les charges constituées par les silices de synthèse que sont les silices de combustion et les silices de précipitation.

Par charge minérale hydratée (C₃) on entend selon l'invention des charges contenant de l'eau de cristallisation faisant partie de la structure moléculaire de (C₃). Cette charge (C₃) est différente de (C₂).

La charge (C₃) préférée est l'alumine hydratée symbolisée généralement par les formules Al₂O₃, 3 H₂O ou Al(OH)₃.

On peut également utiliser :
- un mica hydraté tel que la vermiculite expansée ou non expansée,
- du sulfate d'ammonium et d'aluminium, dodécahydraté :

   NH₄Al (SO₄)₂, 12 H₂O
- du sulfate de chrome pentadécahydraté :

   Cr₄ (SO₄)₃, 15 H₂O
- du sulfate de sodium heptahydraté :

   Na₄SO₃, 7 H₂O
- du sulfate de potassium et de chrome décahydraté :

   KCr (SO₄)₂, 12 H₂O
- du pyrophosphate tétrasodique, décahydraté :

   Na₄P₂O₂, 10 H₂O
- de l'oxyde de calcium hexahydraté :

   CaO, 8 H₂O
- de l'orthophosphate trisodé, décahydraté :

   Na₃PO₄, 10 H₂O
- des zéolites hydratées.

On utilise 5 à 200 parties, de préférence 50 à 150 parties de charges (C₃). Lorsque la charge (C₃) est présente dans la dispersion selon l'invention, il est recommandé que la quantité de (C₂) représente alors de 10 à 50 % en poids de la quantité totale de (C₂) et (C₃).

La dispersion aqueuse peut éventuellement contenir en outre d'autres additifs connus pour améliorer la résistance à la flamme comme par exemple des fibres céramiques, des fibres aramides ou leurs mélanges conformément à l'enseignement de EP-A-212 827, des billes de verre, des oxydes de terres rares en particulier l'oxyde de cérium CeO₂, du borate de zinc, du platine.

### - LE COMPOSE METALLIQUE CATALYTIQUE DE DURCISSEMENT (D) :

Le composé (D), en particulier pour certains agents de réticulation (B) tel que le siliconate, est facultatif, mais dans le cadre de la présente invention, il est recommandé d'utiliser (D).

Les composés catalytiques métalliques de durcissement (D) sont essentiellement les sels d'acides carboxyliques et les halogénures de métaux choisis parmi le plomb, le zinc, le zirconium, le titane, le fer, l'étain, le baryum, le calcium et le manganèse.

Le constituant (D) est de préférence un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl- ou dioctylétain. On utilise de 0,01 à 3, de préférence de 0,05 à 2 parties de sel d'organoétain pour 100 parties de (A).

Les dispersions aqueuses selon l'invention peuvent comporter en outre des additifs usuels tels que notamment des antifongiques, des antimousses, des antigels tels que l'éthylène glycol et le propylène glycol, et des agents thixotropants tels que la carboxyméthylcellulose, la gomme xanthane et l'alcool polyvinylique.

Pour préparer les dispersions aqueuses selon l'invention, il est recommandé d'ajouter sous agitation à température ambiante à l'émulsion (A), en premier lieu éventuellement le catalyseur métallique de durcissement (D), la charge minérale non siliceuse (C₁), éventuellement la charge (C₃), l'agent de réticulation (B) et la charge (C₂).

Le pH de la dispersion aqueuse peut être acide, neutre ou basique. Il est toutefois recommandé de régler le pH de la dispersion à une valeur comprise entre 8 et 13 au moyen d'une base minérale ou organique forte (triéthanolamine, soude, potasse).

L'émulsion finale obtenue est homogénéisée puis dégazée et est ensuite conditionnée en emballage étanche à l'oxygène de l'air et à la vapeur d'eau.

Les constituants (A), (B), (C), et (D), (C₁), (C₂), (C₃) sont mélangés en des quantités telles que la dispersion finale présente une teneur en extrait sec supérieure à 40 %, de préférence supérieure à 60 %, mais généralement inférieure à 90 %.

Les dispersions selon l'invention peuvent être utilisées comme peinture réticulable en couche mince. Elles présentent alors, de préférence, un extrait sec compris entre 40 et 70 %.

Pour déterminer la teneur en extrait sec on place 2 g de dispersion dans une coupelle de pesage en aluminium et on la chauffe une heure à 150 °C dans un four à circulation d'air. Après refroidissement on pèse à nouveau la coupelle et on détermine le pourcentage de matière restante sur les 2 g initiaux qui représente la teneur en extrait sec.

Selon une variante préférée, la dispersion selon l'invention après sa préparation subit une étape de maturation, à température ambiante, de quelques heures à quelques jours.

Cette étape de maturation consiste simplement à laisser reposer la dispersion à l'abri de l'oxygène de l'air avant son utilisation.

Les dispersions selon l'invention peuvent être utilisées pour la réalisation de joints élastomères silicone, en particulier pour le bâtiment et comme revêtements hydrofuges et ignifuges de surfaces de bâtiment en contact avec les intempéries, à la dose par exemple de 20 à 100 g de dispersion par m² de surface à revêtir.

Les dispersions aqueuses selon l'invention peuvent être extrudées en un gel coulant ou non coulant.

Les dispersions aqueuses non-coulantes sont particulièrement utiles quand elles sont utilisées pour réaliser des joints anti-feu dans l'industrie du bâtiment, de la construction navale, etc ....

Ces compositions non-coulantes sont cependant suffisamment fluides pour pénétrer à l'intérieur des cavités à colmater, mais elles sont suffisamment visqueuses pour ne pas fluer d'au plus quelques millimètres sur une surface verticale.

Les dispersions coulantes sont plus particulièrement utilisables comme peintures anti-feu, en particulier sur des vitres.

L'homme du métier sait réaliser des dispersions coulantes ou non coulantes.

Les dispersions non coulantes présentent un extrait sec élevé (supérieur par exemple à 65 %) et une teneur élevée en charge (C₁), constitué par du carbonate de calcium de diamètre particulaire moyen inférieur à 0,1 µm.

Les dispersions coulantes présentent un extrait sec compris par exemple entre 40 et 65 %.

Les dispersions aqueuses selon l'invention peuvent être conditionnées sous forme d'aréosols conformément à l'enseignement de EP-A-212 827 cité comme référence. Les élastomères issus de ces aérosols réticulent sous la forme d'une mousse présentant des propriétés de résistance à la flamme analogue.

Dans tout ce qui suit ou ce qui précède, sauf mentions contraires, les pourcentages et parties sont en poids.

Les exemples suivants illustrent l'invention sans en limiter la portée.

### - EXEMPLE 1 :

On prépare une émulsion (A) en introduisant 1 000 g d'une huile α,ω-(dihydroxy)polydiméthylsiloxane de viscosité 100 mPa.s à 25 °C en présence de 30 g d'acide dodécylbenzène sulfonique et 50 g de Cémulsol® ON 10/20 qui est un tensio-actif non ionique à savoir un composé polyoxyalkyléné à 10 motifs d'oxyde d'éthylène et 20 motifs d'oxyde de propyléne.

On arrête la polymérisation en émulsion par neutralisation du catalyseur au moyen de 14,5 g de triéthanolamine, quand la viscosité de l'huile atteint 300 000 mPa.s à 25 °C.

L'émulsion (A) obtenue présente un extrait sec de 61 %, un pH de 7.

Dans un malaxeur à bras MEILI ® de 5 litres, on ajoute les différents constituants dans l'ordre indiqué ci-après, et en respectant à chaque fois une durée d'incorporation d'environ 10 minutes :
- 186 parties d'émulsion (A),
- 2,2 parties de solution aqueuse de KOH à 50 % en poids,*
- 2,6 parties d'émulsion aqueuse à 40 % en poids de dilaurate de dioctylétain,
- 70 parties de CaCO₃ de précipitation de granulométrie inférieure à 0,1 µm commercialisé sous la dénomination WINNOFIL SP® par la Société ICI,
- 200 parties d'alumine hydratée SH 100® commercialisée par la Société LAMBERT RIVIERE,
- 7 parties de résine silicone constituée de 70 % en poids de motifs CH₃SoO_{1,5} et 30 % en poids de motifs (CH₃)₂SiO de viscosité 5 400 mPa.s à 25 °C à 2,2 % d'OH,
- 50 parties de borax décahydraté commercialisé par la Société PROLABO.

Après l'addition de borax on homogénéise pendant environ 30 minutes sous une pression réduite de 2,5 KPa.

La dispersion finale a une teneur en extrait sec de 85 % et un pH de 9.

Cette dispersion est divisée en plusieurs lots qui sont stockés en emballages étanches (cartouches en matière plastique). Ces cartouches sont stockées avant emploi pendant des durées (t en jours) et à des températures θ en °C), distinctes.

### - EXEMPLE COMPARATIF 2 :

On répète exactement le mode opératoire de l'exemple 1 sauf que l'on remplace les 50 g de borax tétrahydraté par 50 g de Mica MAS 10® commercialisé par la Société ADRISS.

Les propriétés mécaniques obtenues sont rassemblées dans le tableau 1 ci-après.

On étend à la râcle la dispersion suivant une pellicule (film) de 2 mm d'épaisseur qu'on laisse sécher pendant 10 jours à température ambiante (20 °C).

Sur une premier lot de pellicules séchées, on mesure les propriétés mécaniques moyennes suivantes :
- la dureté Shore A (DSA) selon la norme ASTM-D-2240,
- la résistance à la rupture (R/R) selon la norme AFNOR-T-46 002 correspondant à la norme ASTMD 412, EN MPa,
- l'allongement à la rupture (A/R) en % selon la norme AFNOR-T 46 002,

Les propriétés mécaniques obtenues sont rassemblées dans le tableau 1 ci-après.

Pour apprécier l'adhérence, on dépose sur un support en verre ou en béton, un cordon de dispersion aqueuse de 4 mm d'épaisseur. Après 12 jours on apprécie l'adhérence de l'élastomère formé en tirant manuellement sur le cordon.

Les adhésions ont été qualifiées de trois manières :
- bonne adhérence lorsque le cordon ne peut être décollé de son support (notée ++),
- adhérence moyenne lorsque le cordon est décollé difficilement et par petites surfaces (notée +),
- absence d'adhérence lorsque le cordon se décolle facilement (notée 0).

Les appréciations de l'adhésion sont rassemblées dans le tableau 1 ci-après.

### - EXEMPLE 3 :

Cet exemple illustre la résistance à la flamme de l'élastomère issu de la dispersion décrite à l'exemple 1.

3.a) - on place verticalement des pellicules de films d'élastomères de 2 mm d'épaisseur préparés pour apprécier les propriétés mécaniques dans la flamme horizontale d'un bec Bunsen pendant 10 minutes, l'extrémité du cône bleu de la flamme affleurant toujours la même partie de la surface de l'élastomère.

La température de la flamme est d'environ 960 °C.

Lorsque les films sont retirés de la flamme, on constate qu'ils sont parfaitement auto-extinguibles, et la partie de la surface de l'élastomère exposée au feu conserve une bonne cohésion. On observe une céramisation de la surface en contact direct avec la flamme.

3.b) - on repète exactement l'exemple 3.a- ci-dessus sauf que :
- l'épaisseur de la pellicule est de 8 mm,
- on enregistre à l'aide de 3 thermocouples :
   . la température θE de la face exposée à la flamme,
   . la température θN de la face non exposée à la flamme,
   . la température θC au coeur de la pellicule,
- le temps t en minutes d'exposition à la flamme est de 20 minutes. Les résultats obtenus sont rassemblés dans le tableau 2 ci-après.

3.c) - on répète exactement le mode opératoire de l'exemple 3.b) sauf que le bec Bunsen est remplacé par un chalumeau oxygène/acétylène dont la température est de 2 400 °C. La pellicule résiste environ 15 minutes avant d'être percée malgré l'effet simultané de la combustion retardée et du souffle du chalumeau.

On observe une céramisation de la surface en contact direct avec la flamme.

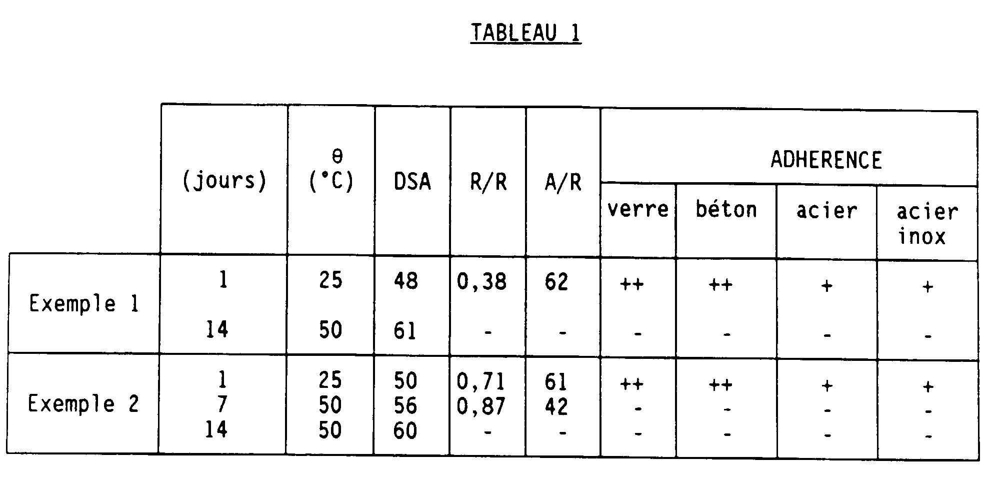

**TABLEAU 2**

| t | 0 | 1 | 2 | 3 | 4 | 5 | 8 | 10 | 15 | 20 |
|---|---|---|---|---|---|---|---|---|---|---|
| θE | 20 | 958 | 954 | 962 | 959 | 963 | 955 | 960 | 964 | 960 |
| θN | 20 | 42 | 55 | 82 | 98 | 106 | 182 | 198 | 223 | 243 |
| θC | 20 | 55 | 77 | 103 | 142 | 177 | 247 | 261 | 304 | 341 |

## Revendications

1. Dispersion aqueuse à base de silicone, réticulant en un élastomère résistant à la flamme, par élimination de l'eau dans les conditions ambiantes, caractérisée en ce qu'elle est constituée des ingrédients suivants :
(A) : 100 parties en poids d'une émulsion, du type huile-dans-l'eau d'un α,ω-(dihydroxy) polydiorganosiloxane, stabilisée par au moins un agent tensioactif choisi parmi les agents tensioactifs anioniques et non-ioniques et leurs mélanges,
(B) : une quantité efficace d'au moins un agent de réticulation qui est choisi parmi :
- un organosiliconate,
- une résine silsesquioxane,
- une résine silicone hydroxylée présentant par molécule, au moins 2 motifs différents choisis parmi ceux de formules : R₃SiO_{0,5} (M), R₂SiO (D), RSiO_{1,5} (T) et SiO₂ (Q), R étant un radical alkyle en C₁ -C₆, vinyle et trifluoro-3,3,3 propyle et une teneur en poids en groupe hydroxyle comprise entre 0,1 et 10 %,
- un silane de formule :
RₐSiX₄₋ₐ
dans laquelle R est un radical méthyle ou vinyle, a est 1 ou 0,
X est un groupe condensable et/ou hydrolysable choisi parmi les groupes alcoxy, acyloxy, cétiminoxy, alkylamino et alcényloxy, et leurs divers mélanges possibles,
(C₁): 5 à 100 parties en poids d'une charge minérale non siliceuse non hydratée,
(C₂): 10 à 100 parties en poids, de poudre de borax hydraté,
(C₃): éventuellement 5 à 200 parties d'une charge minérale hydratée non siliceuse différente de (C₂),
(D) : éventuellement 0,01 à 3 parties en poids d'un composé métallique catalytique de durcissement, ladite dispersion ayant une teneur en extrait sec d'au moins 40 %.

2. Dispersion selon la revendication 1, caractérisée en ce qu'elle contient 20 à 80 parties en poids de (C₁).

3. Dispersion aqueuse selon la revendication 1 ou 2, caractérisée en ce que, lorsque la charge (C₃) est présente, la quantité de (C₂) représente de 10 à 50 % en poids de la quantité totale de (C₂) et (C₃).

4. Dispersion selon l'une quelconque des revendications précédentes, caractérisée en ce que le borax hydraté (C₂) est choisi parmi le borax décahydraté, le borax pentahydraté et le borax tétrahydraté.

5. Dispersion aqueuse selon la revendication 3 ou 4, caractérisée en ce que (C₃) est l'alumine hydratée.

6. Dispersion aqueuse selon l'une quelconque des revendications précédentes, caractérisée en ce que (C₁) est du carbonate de calcium dont le diamètre particulaire moyen est inférieur à 0,1 µm.

7. Dispersion aqueuse selon l'une quelconque des revendications précédentes, caractérisée en ce que le composé métallique (D) est un sel d'organoétain se trouvant sous forme d'une émulsion aqueuse.

8. Procédé de préparation d'une dispersion aqueuse telle que définie dans les revendications 1 à 7, caractérisé en ce qu'on introduit, dans l'ordre sous agitation à température ambiante, l'émulsion (A), éventuellement le catalyseur (D), la charge (C₁), éventuellement la charge (C₃), l'agent de réticulation (B) et la charge (C₂).

## Patentansprüche

1. Wäßrige Dispersion auf der Basis von Silicon, die durch Entfernung von Wasser unter Umgebungsbedingungen zu einem flammfesten Elastomer aushärtet, dadurch gekennzeichnet, daß sie aus den folgenden Bestandteilen gebildet wird:
(A) : 100 Gewichtsteile einer Emulsion vom Typ Öl-in-Wasser eines α,ω-(Dihydroxy)-polydiorganosiloxans, stabilisiert durch mindestens ein oberflächenaktives Mittel, ausgewählt unter den anionischen oberflächenaktiven Mitteln und den nichtionischen oberflächenaktiven Mitteln und ihren Mischungen,
(B) : eine wirksame Menge von mindestens einem Vernetzungsmittel, das ausgewählt wird unter:
- einem Organosiliconat,
- einem Silsesquioxan-Harz,
- einem hydroxylierten Siliconharz, das pro Molekül mindestens zwei unterschiedliche Struktureinheiten aufweist, ausgewählt unter denen der Formeln: R₃SiO_{0,5}(M), R₂SiO(D), RSiO_{1,5}(T) und SiO₂(Q), worin R einen Alkylrest mit 1 bis 6 Kohlenstoffatomen, Vinyl und 3,3,3-Trifluor-propyl darstellt, und das Harz einen Gewichtsgehalt an Hydroxylgruppen zwischen 0,1 % und 10 % aufweist,
- einem Silan der Formel RₐSiX₄₋ₐ, worin R einen Methylrest oder Vinylrest darstellt, a 1 oder 0 ist,
X eine kondensierbare und/oder hydrolysierbare Gruppe darstellt, ausgewählt unter den Gruppen Alkoxy, Acyloxy, Cetiminoxy, Alkylamino und Alkenyloxy und ihren verschiedenen möglichen Mischungen,
(C₁) : 5 bis 100 Gewichtsteile eines mineralischen, nichtsilikatischen und nicht-hydratisierten Füllstoffes,
(C₂) : 10 bis 100 Gewichtsteile hydratisiertes Boraxpulver,
(C₃) : Gegebenenfalls 5 bis 200 Teile eines mineralischen, hydratisierten und nicht-silikatischen Füllstoffes, der unterschiedlich zu (C₂) ist,
(D) : gegebenenfalls 0,01 bis 3 Gewichtsteile einer katalytischen metallischen Härterverbindung,
wobei die genannte Dispersion einen Gehalt an Trockenextrakt von mindestens 40 % besitzt.

2. Dispersion nach Anspruch 1, dadurch gekennzeichnet, daß sie 20 bis 80 Gewichtsteile von (C₁) enthält.

3. Wäßrige Dispersion nach Anspruch 1 oder 2, dadurch gekennzeichnet, daß in dem Fall, wo der Füllstoff (C₃) anwesend ist, die Menge von (C₂) 10 bis 50 Gew.-% der Gesamtmenge von (C₂) und (C₃) darstellt.

4. Dispersion nach irgendeinem der vorstehenden Ansprüche, dadurch gekennzeichnet, daß der hydratisierte Borax (C₂) unter Borax-Dekahydrat, Borax-Pentahydrat und Borax-Tetrahydrat ausgewählt wird.

5. Wäßrige Dispersion nach Anspruch 3 oder 4, dadurch gekennzeichnet, daß (C₃) hydratisierte Tonerde ist.

6. Wäßrige Dispersion nach irgendeinem der vorstehenden Ansprüche, dadurch gekennzeichnet, daß (C₁) Calciumcarbonat ist, dessen mittlerer Teilchendurchmesser unter 0,1 µm liegt.

7. Wäßrige Dispersion nach irgendeinem der vorstehenden Ansprüche, dadurch gekennzeichnet, daß die metallische Verbindung (D) ein Organozinnsalz ist, das in Form einer wäßrigen Emulsion vorliegt.

8. Verfahren zur Herstellung einer wäßrigen Dispersion wie in den Ansprüchen 1 bis 7 definiert, dadurch gekennzeichnet, daß man in der nachstehenden Reihenfolge unter Rühren bei Umgebungstemperatur einträgt: die Emulsion (A), gegebenenfalls den Katalysator (D), den Füllstoff (C₁), gegebenenfalls den Füllstoff (C₂), das Vernetzungsmittel (B) und den Füllstoff (C₂).

## Claims

1. Aqueous silicone-based dispersion, crosslinking to a flame-resistant elastomer by removal of water under ambient conditions, characterized in that it is composed of the following ingredients:
(A): 100 parts by weight of an emulsion, of the oil-in-water type, of an α,ω-(dihydroxy)polydiorganosiloxane, which emulsion is stabilized by at least one surface-active agent chosen from anionic and non-ionic surface-active agents and their mixtures,
(B): an effective amount of at least one crosslinking agent which is chosen from:
- an organosiliconate,
- a silsesquioxane resin,
- a hydroxylated silicone resin having, per molecule, at least 2 different units chosen from those of formulae: R₃SiO_{0.5} (M), R₂SiO (D), RSiO_{1.5} (T) and SiO₂ (Q), R being a C₁-C₆ alkyl, vinyl and 3,3,3-trifluoropropyl radical, and a content by weight of hydroxyl groups of between 0.1 and 10 %,
- a silane of formula:
RₐSiX₄₋ₐ
in which R is a methyl or vinyl radical, a is 1 or 0 and X is a condensable and/or hydrolysable group chosen from the alkoxy, acyloxy, ketiminoxy, alkylamino and alkenyloxy groups, and their various possible mixtures,
(C₁): 5 to 100 parts by weight of a non-hydrated non-siliceous inorganic filler,
(C₂): 10 to 100 parts by weight of hydrated borax powder,
(C₃): optionally 5 to 200 parts of a non-siliceous hydrated inorganic filler other than (C₂),
(D): optionally 0.01 to 3 parts by weight of a catalytic metal curing compound,
the said dispersion having a solids content of at least 40 %.

2. Dispersion according to claim 1, characterized in that it contains 20 to 80 parts by weight of (C₁).

3. Aqueous dispersion according to claim 1 or 2, characterized in that, when the filler (C₃) is present, the amount of (C₂) represents from 10 to 50 % by weight of the total amount of (C₂) and (C₃).

4. Dispersion according to any one of the preceding claims, characterized in that the hydrated borax (C₂) is chosen from borax decahydrate, borax pentahydrate and borax tetrahydrate.

5. Aqueous dispersion according to claim 3 or 4, characterized in that (C₃) is hydrated alumina.

6. Aqueous dispersion according to any one of the preceding claims, characterized in that (C₁) is calcium carbonate in which the mean particle diameter is less than 0.1 µm.

7. Aqueous dispersion according to any one of the preceding claims, characterized in that the metal compound (D) is an organotin salt which is in the form of an aqueous emulsion.

8. Process for the preparation of an aqueous dispersion as defined in claims 1 to 7, characterized in that the emulsion (A), optionally the catalyst (D), the filler (C₁), optionally the filler (C₃), the crosslinking agent (B) and the filler (C₂) are introduced, in order, with stirring at room temperature.
